(19)

Europäisches
Patentamt
European
Patent Office
Office européen
des brevets

(11) **EP 2 109 320 A2**

(12) **EUROPEAN PATENT APPLICATION**

(43) Date of publication:
**14.10.2009 Bulletin 2009/42**

(51) Int Cl.:
**H04N 7/26** (2006.01) **H04N 7/50** (2006.01)

(21) Application number: **09156823.8**

(22) Date of filing: **31.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (72) Inventors:<br>• **Mizuno, Hiroshi**<br>  **TOKYO 108-0075 (JP)**<br>• **Ichinose, Tsutomu**<br>  **TOKYO 108-0075 (JP)** |
| (30) Priority: **11.04.2008 JP 2008103981** | (74) Representative: **Beder, Jens**<br>**Mitscherlich & Partner**<br>**Patent-und Rechtsanwälte**<br>**Sonnenstraße 33**<br>**80331 München (DE)** |
| (71) Applicant: **Sony Corporation**<br>**Tokyo 108-0075 (JP)** | |

(54) **Information processing apparatus and information processing method**

(57)    An information processing apparatus includes: a data capturing unit controlling a recording medium containing video data and capturing encoding target data; a characteristic extraction unit receiving the encoding target data and extracting a characteristic point, at least including a dividable point, of the encoding target data as a preprocess for encoding; a storage unit storing the encoding target data; a memory unit storing information about the characteristic point extracted by the characteristic extraction unit; a dividing unit dividing the encoding target data into predetermined pieces of divided data; and encoding units encoding the divided data into divided encoded data. The dividing unit determines a dividing point, at which the encoding target data are substantially equally allocatable to the encoding units, on the basis of the total number of the encoding units and the information about the characteristic point, and then allocates the divided data to the encoding units.

FIG. 1

**Description**

BACKGROUND OF THE INVENTION

1. Field of the Invention

The invention relates to an information processing apparatus and information processing method and, more particularly, to an information processing apparatus and information processing method that extract characteristic information of video data to enable efficient encoding with reduced processing time.

2. Description of the Related Art

In an existing art, an authoring system used at a site at which a recording medium, such as an optical disk, is created carries out encoding (compression coding) respectively on video data, audio data, and the like, using, for example, MPEG (Moving Picture Experts Group). Then, the authoring system multiplexes the pieces of encoded data obtained through the respective encodings and stores the multiplexed stream in a recording medium.

The thus configured authoring system allocates the amount of bits recordable in the recording medium respectively to video data, audio data, and the like, and then carries out encoding on each of the pieces of data so that the encoded data fall within the amount of bits allocated.

For example, Japanese Unexamined Patent Application Publication No. 2000-278042 describes a so-called "two-pass encoding" as an encoding method for video data. The two-pass encoding is a method that consists of a temporary (preliminary) encoding and an actual encoding.

Hereinafter, the temporary encoding is termed a first-pass encoding, and the actual encoding is termed a second-pass encoding, and then the two-pass encoding will be schematically described.

An encoder executes first-pass encoding, in which certain encoding conditions are held, on a series of encoding target video data. At this time, various pieces of data obtained at the time of the first-pass encoding, for example, the amount of bits generated, are sequentially detected frame by frame.

Subsequently, the encoder allocates bits to each of the frames that constitute the video data on the basis of the thus detected amount of bits generated frame by frame. That is, the encoder sets a target amount of bits used in second-pass encoding frame by frame.

Furthermore, the encoder allocates a picture type used in second-pass encoding. Allocation of a picture type means allocating an encoding type to each of the frames.

Specifically, in MPEG, each of the frames is encoded in any one of the encoding types, that is, I-picture (Intra-Picture), P-picture (Predictive-Picture) and B-picture (Bidirectionally Predictive-Picture). The I-picture indicates an encoding type in which one-frame image data are directly encoded without using other frame image data. That is, the I-picture indicates an encoding type of intraframe encoding. In addition, the P-picture and the B-picture indicate an encoding type of interframe encoding. That is, the P-picture basically indicates an encoding type in which a differential (prediction error) between one-frame image data and temporarily preceding prediction-frame image data of an I-picture or P-picture is obtained and then the differential is encoded. In addition, the B-picture basically indicates an encoding type in which a differential between one-frame image data and prediction-frame image data of a temporarily preceding or following I-picture or P-picture is obtained and then the differential is encoded.

Thus, allocation of a picture type means allocating each of the frames to any one of three encoding types, that is, I-picture, P-picture and B-picture. In other words, allocation of a picture type may be regarded as setting the structure of each GOP (Group Of Picture).

In this way, after the first-pass encoding, setting of a target amount of bits and allocation of a picture type are performed frame by frame using the result of the first-pass encoding.

Subsequently, encoding conditions that at least include a picture type and target amount of bits of each frame are set, and then second-pass encoding is carried out in accordance with the set encoding conditions.

That is, the encoder carries out second-pass encoding on the video data that are the same as the data used in the first-pass encoding, and outputs the resultant encoded video data. Specifically, the encoder sequentially encodes data of each frame that constitutes the video data so as to have the allocated picture type and the target amount of bits. As a result, a bit stream formed of continuously arranged encoded frame data of any one of I-picture, B-picture, and P-picture is output from the encoder as encoded video data.

Other encoding methods for video data are, for example, described in Japanese Unexamined Patent Application Publication No. 2002-326864 and Japanese Unexamined Patent Application Publication No. 2001-53570.

The method described in JP-A-2002-326864 carries out the following first to third processes sequentially. That is, in the first process, first-pass encoding is carried out on all sections of video data. In the second process, second-pass encoding is carried out only on partially specific sections within the video data. In the third process, only the data in the specific sections within the first-pass-encoded video data are replaced with second-pass-encoded video data, and then the resultant data are output as final encoded video data.

In addition, the following method is described in JP-A-2001-53570. That is, JP-A-2001-53570 describes a method in which a target amount of bits is set so that, within the first-pass-encoded video data, the allocated amount of bits is reduced from a section for which it is not problematic if the amount of bits is reduced and the reduced amount of bits is allocated to another problematic section, and then second-pass encoding is carried out in accordance with the thus set target amount of bits.

Thus, encoding uses a high load in bit amount calculation, or the like. For this reason, for example, when encoding is carried out using MPEG-4 AVC (H.264/AVC), which is one of codecs employed in Blu-Ray (trademark), a processing load is higher than MPEG-2 that is employed in DVD (Digital Versatile Disc) and, as a result, encoding time elongates.

To compensate for the above, there is a method in which encoding is distributed and carried out in parallel processing to reduce encoding time. For example, a plurality of similarly configured encoding PCs (Personal Computers) are provided, and then parallel processing is executed on materials equally allocated to the encoding PCs. Thus, H. 264/AVC encoding is efficiently processed to make it possible to reduce encoding time.
Patent Document 4: Japanese Unexamined Patent Application Publication No. 2006-74461

SUMMARY OF THE INVENTION

Incidentally, when parallel processing is executed in distributed encoding, it may be necessary that division points of encoding target video data are determined in advance by searching for points that do not influence image quality, in a preprocess for encoding.

However, in an existing authoring system that carries out image compression of a high processing load, such as an AVC codec, with a single or a plurality of processing apparatuses, capturing of video data, its associated control of a video data recording device and preprocess/compression of video data have been carried out separately. As a result, even when distributed encoding is carried out, it has taken several times (for example, three times of actual time) the processing time of another codec compression apparatus that is able to carry out compression in real time.

There is a need for providing an information processing apparatus and information processing method that are able to efficiently carry out encoding with reduced processing time by extracting the characteristic of encoding target video data as a preprocess for encoding.

According to an embodiment of the invention, an information processing apparatus includes: a data capturing unit that controls playing of a recording medium in which video data are recorded and that captures encoding target data; a characteristic extraction unit that receives the encoding target data and that extracts a characteristic point, which at least includes a dividable point, of the encoding target data as a preprocess for encoding; a storage unit that stores the encoding target data; a memory unit that stores information about the characteristic point extracted by the characteristic extraction unit; a dividing unit that divides the encoding target data into a predetermined number of pieces of divided data; and a plurality of encoding units that encode the pieces of divided data into pieces of divided encoded data, wherein the dividing unit determines a dividing point, at which the encoding target data may be substantially equally allocated to the encoding units, on the basis of the total number of the plurality of encoding units and the information about the characteristic point, and then allocates the pieces of divided data to the encoding units.

In addition, according to another embodiment of the invention, an information processing method includes the steps of: controlling playing of a recording medium in which video data are recorded and capturing encoding target data; receiving the encoding target data and extracting a characteristic point, which at least includes a dividable point, of the encoding target data as a preprocess for encoding; storing the encoding target data; storing information about the extracted characteristic point; dividing the encoding target data into a predetermined number of pieces of divided data; and encoding the pieces of divided data into pieces of divided encoded data using a plurality of encoding apparatuses, wherein dividing the encoding target data includes determining a dividing point, at which the encoding target data may be substantially equally allocated to the encoding apparatuses, on the basis of the total number of the plurality of encoding apparatuses and the information about the characteristic point, and then allocating the pieces of divided data to the encoding apparatuses.

BRIEF DESCRIPTION OF THE DRAWINGS

FIG. 1 is a block diagram that shows an example of the configuration of a studio-side authoring system to which an information processing apparatus according to an embodiment is applied;
FIG. 2 is a flowchart that shows an example of the process executed in the studio-side authoring system;

FIG. 3 is a block diagram that shows an example of the configuration of a plant-side authoring system;

FIG. 4 is a flowchart that shows an example of the process executed in the plant-side authoring system;

FIG. 5 is a block diagram that shows an example of the configuration of a video data capturing apparatus to which the information processing apparatus according to the embodiment is applied;

FIG. 6 is a conceptual view that illustrates a candidate division point, a division point and a division processing section in encoding target video data;

FIG. 7 is a conceptual view that illustrates 2-3 pulldown video data;

FIG. 8 is a block diagram that shows an example of the configuration of a video signal processing apparatus in the authoring system;

FIG. 9 is a block diagram that shows an example of the configuration of a video signal distributed processing apparatus when video data are encoded in a distributed manner;

FIG. 10 is a flowchart that shows an example of the process of the information processing apparatus according to the embodiment; and

FIG. 11 is a block diagram that shows an example of the configuration of the information processing apparatus according to the embodiment.

## DESCRIPTION OF THE PREFERRED EMBODIMENTS

Hereinafter, a specific embodiment of the invention will be described in detail with reference to the accompanying drawings. Here, the overall configuration of an authoring system will be described first, and then an information processing system that encodes video data in parallel processing, including a characteristic preprocess for encoding, will be described.

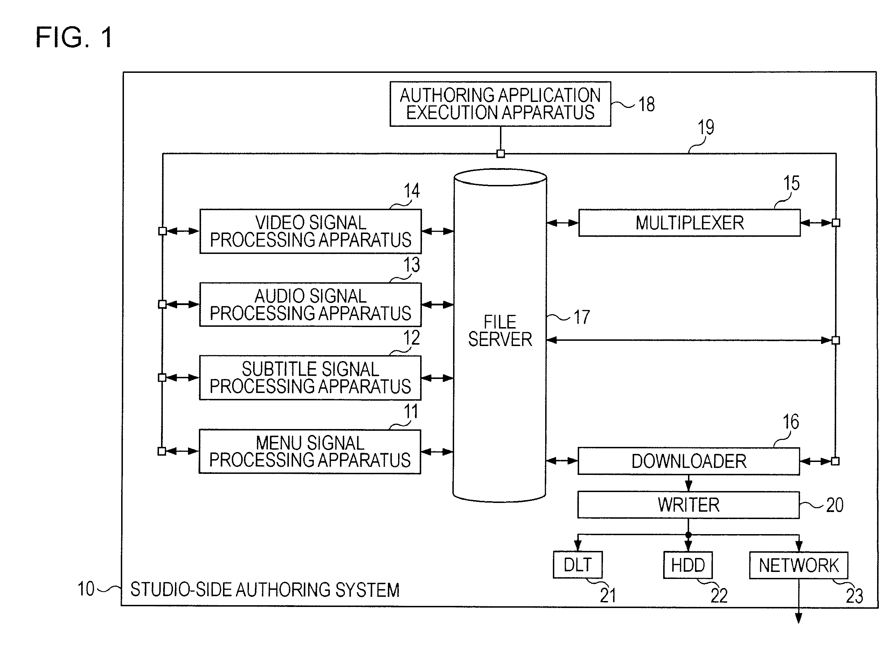

FIG. 1 is a view that shows an example of the configuration of an authoring system installed at a studio side (hereinafter, referred to as "studio-side authoring system") to which an information processing apparatus according to the present embodiment is applied.

The studio-side authoring system 10 is formed so that a menu signal processing apparatus 11 through an authoring application execution apparatus 18 are connected through a network 19 to one another and, in addition, a DLT (Digital Linear Tape) 21, a HDD (Hard Disk Drive) 22 and a network 23 are connected to the downloader 16 through a writer 20.

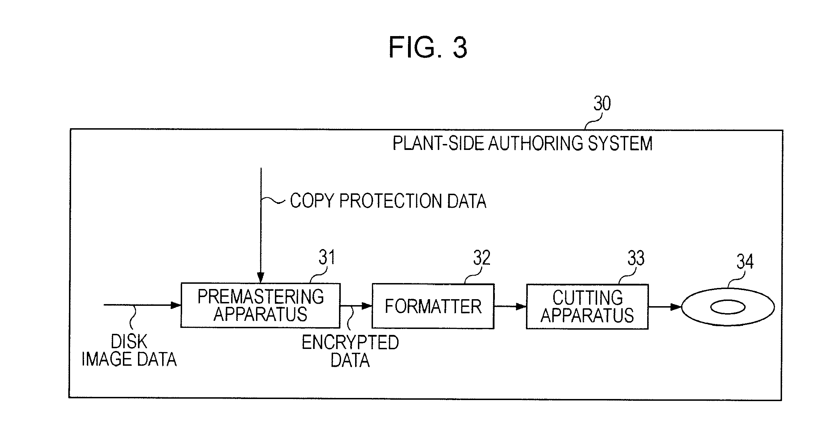

The studio-side authoring system 10 generates a multiplexed stream, which will be recorded in an optical disk (not shown), as a file, and stores the file in any one of the DLT 21, the HDD 22 and the network 23. Note that storing data in the network 23 means that data are transferred to another apparatus connected to the network 23, for example, a plant-side authoring system 101 shown in FIG. 3, which will be described later, through the network 23 and then the transferred data are held (stored) in the another apparatus.

In the studio-side authoring system 10, the menu signal processing apparatus 11 is controlled by the authoring application execution apparatus 18 to switch its operation, and, for example, carries out encoding on video data of a menu screen, supplied from a video tape recorder (not shown), or the like, and then stores the resultant encoded video data in the file server 17.

The subtitle signal processing apparatus 12 is controlled by the authoring application execution apparatus 18 to switch its operation, and, for example, carries out encoding on video data, such as title, supplied from a video tape recorder (not shown), or the like, and then stores the resultant encoded video data in the file server 17.

The audio signal processing apparatus 13 is controlled by the authoring application execution apparatus 18 to switch its operation, and, for example, carries out encoding on audio data supplied from a video tape recorder (not shown), or the like, and then stores the resultant encoded audio data in the file server 17.

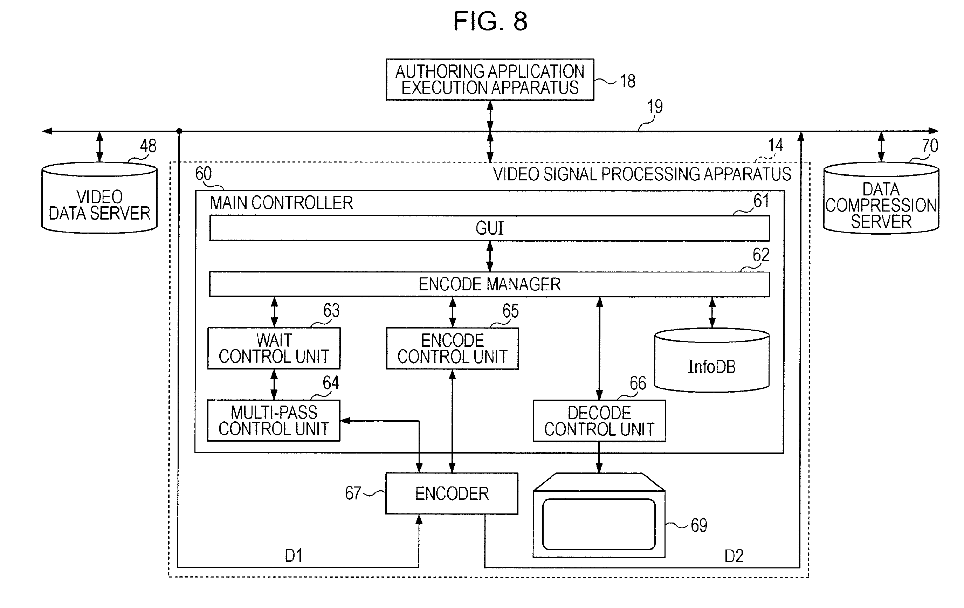

The video signal processing apparatus 14 is controlled by the authoring application execution apparatus 18 to carry out encoding on main video data within an editing target (data) that will be recorded in an optical disk (not shown), and then stores the resultant encoded video data in the file server 17. Note that the detailed example of the configuration of the video signal processing apparatus 14 will be described later with reference to FIG. 8.

The multiplexer 15 is controlled by the authoring application execution apparatus 18 to multiplex the above described encoded audio data and encoded video data that are stored in the file server 17, and then generates the resultant multiplexed stream as a file. Note that, hereinafter, the above file is termed a multiplexed stream file.

The multiplexed stream file generated by the multiplexer 15 is supplied through the network 19 to the downloader 16. The downloader 16 stores the multiplexed stream file in at least any one of the DLT 21, the HDD 22 and the network 23 through the writer 20.

In this way, the multiplexed stream file stored at least in any one of the DLT 21, the HDD 22 and the network 23 is supplied to, for example, a plant-side authoring system 30 shown in FIG. 3, which will be described later, as disk image data. The plant-side authoring system 30, for example, records the multiplexed stream file in an optical disk. That is, an original master 34 of an optical disk in which the multiplexed stream file is recorded is created by the plant-side authoring system 30. Note that further details of the plant-side authoring system 30 will be described later.

The file server 17 is, for example, formed of a computer having a network management function and a disk array that allows high-speed access. As described above, the file server 17 stores the encoded video data and encoded audio data, supplied through the network 19 from the menu signal processing apparatus 11, the subtitle signal processing apparatus 12, the audio signal processing apparatus 13 and the video signal processing apparatus 14. In addition, the file server 17, in response to a request from the multiplexer 15, or the like, outputs the encoded video data and/or encoded audio data stored therein to the multiplexer 15, or the like, through the network 19.

The authoring application execution apparatus 18 is, for example, formed of a computer that is able to execute authoring application software. The authoring application software is software for controlling the overall operation of the studio-side authoring system 10. That is, the authoring application execution apparatus 18, for example, transfers an editing list to the video signal processing apparatus 14, the downloader 16, and the like, in accordance with various conditions set by an operator to notify the apparatuses of a processing target, and controls operation of the apparatuses. In addition, the authoring application execution apparatus 18 calculates data sizes to be allocated to audio data and video data on the basis of a data size recordable in an optical disk (not shown), and transfers encoding files with the calculated data sizes to the apparatuses.

In addition, the authoring application execution apparatus 18 provides chapter information of video signals, set by the operator, to the video signal processing apparatus 14. Here, the chapter is a frame on which encoding is forcibly carried out through intraframe encoding, and, in an optical disk apparatus, it is possible to check the recorded content by track-jumping toward the chapter.

Furthermore, the authoring application execution apparatus 18 provides the maximum number of pictures of each GOP (Group Of Pictures), array of encoding in each GOP, and the like, in regard to the video signals to the video signal processing apparatus 14. In addition, the authoring application execution apparatus 18 also notifies the video signal processing apparatus 14 of a multi-angle processing target. Note that the multi-angle means a process in which a plurality of video materials are time-division multiplexed and recorded in an optical disk to enable watching, for example, a scene, in which a train is running, at different camera angles in response to user's selection.

In this way, the authoring application execution apparatus 18 transfers an encoding file that contains the above described information together with information for other encoding to the video signal processing apparatus 14. Note that, hereinafter, the menu signal processing apparatus 11 through the downloader 16 that are controlled by the authoring application execution apparatus 18 are respectively termed as internal apparatuses of the studio-side authoring system 10.

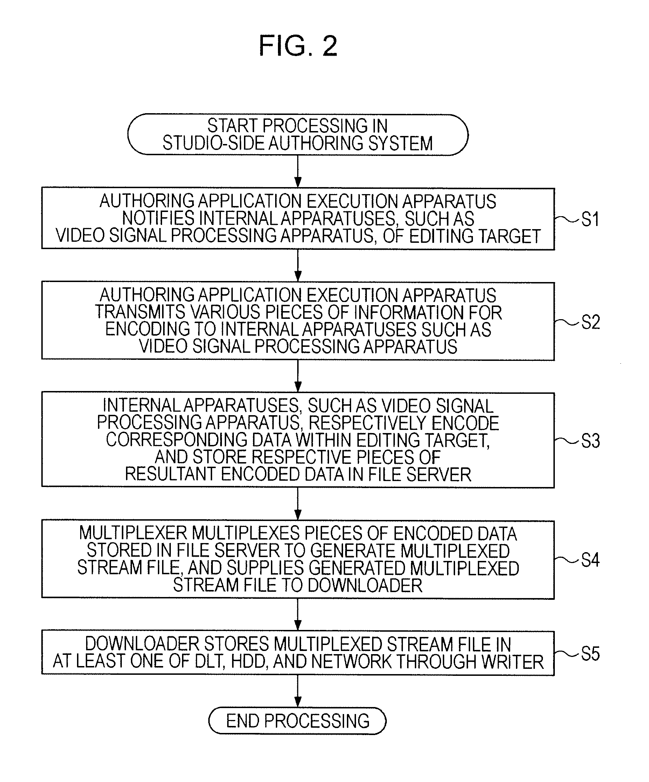

Here, an example of the process executed in the studio-side authoring system 10 will be described with reference to the flowchart of FIG. 2.

In step S1, the authoring application execution apparatus 18 transfers an editing list to the internal apparatuses, such as the video signal processing apparatus 14, in accordance with an operation of an operator, to thereby notify the internal apparatuses, such as the video signal processing apparatus 14, of an editing target.

Note that the editing target means a so-called a material (data) that, for example, at least includes processing target video data for the video signal processing apparatus 14 and, where necessary, includes selected types and selected number of pieces of data from among processing target audio data of the audio signal processing apparatus 13, processing target video data of the subtitle signal processing apparatus 12 and processing target video data of the menu signal processing apparatus 11.

In step S2, the authoring application execution apparatus 18 provides various pieces of information for encoding to the internal apparatuses, such as the video signal processing apparatus 14.

Note that here, various pieces of information transferred in step S2 are, for example, collectively contained in a predetermined file, and that file is transferred to the internal apparatuses, such as the video signal processing apparatus 14. Hereinafter, the above file is termed an encoding file.

Specifically, for example, in step S2, the authoring application execution apparatus 18 acquires a data size recordable in an optical disk, or the like, in which the editing target will be recorded. Subsequently, the authoring application execution apparatus 18 calculates a data size to be allocated to each of the pieces of data that constitute the editing target on the basis of the acquired data size. Then, the authoring application execution apparatus 18 transfers the encoding files that contain the calculated data sizes respectively to the corresponding internal apparatuses among the internal apparatuses. For example, the authoring application execution apparatus 18 transfers the encoding file that contains a data size allocated to the processing target video data for the video signal processing apparatus 14, that is, the video data other than a menu or a title within the editing target (hereinafter, referred to as "data size allocatable to video data"), to the video signal processing apparatus 14.

In addition, for example, in step S2, the authoring application execution apparatus 18 transfers the encoding file that contains time information of a chapter set by the operator (hereinafter, referred to as "access (chapter) point") in regard to video data other than the menu or the title within the editing target to the video signal processing apparatus 14. An apparatus that is able to handle an optical disk, or the like, is able to check the recorded content by track-jumping toward the chapter.

In addition, for example, in step S2, the authoring application execution apparatus 18 transfers the encoding file that contains the maximum number of display pictures (for example, 15 pictures) of each GOP, array of encoding in each GOP, and the like, in regard to video data other than the menu or the title within the editing target to the video signal processing apparatus 14.

Furthermore, for example, in step S2, the authoring application execution apparatus 18, where necessary, transfers the encoding file that also contains a multi-angle processing target to the video signal processing apparatus 14.

Yet furthermore, for example, in step S2, the authoring application execution apparatus 18, where necessary, transfers the encoding file that also contains "capacity of optical disk", "start time and stop time of VTR", and the like, to the video signal processing apparatus 14.

Through the above described process in step S2, when the encoding file that contains various pieces of information for encoding is supplied to each of the internal apparatuses, the process proceeds to step 3.

In step S3, the internal apparatuses, such as the video signal processing apparatus 14, respectively encode corresponding pieces of data within the editing target on the basis of various pieces of information contained in the encoding file, and stores the resultant pieces of encoded data in the file server 17.

In step S4, the multiplexer 15 multiplexes the pieces of encoded data, stored in the file server 17 in step S3, to generate a multiplexed stream file and then supplies the multiplexed stream file to the downloader 16.

In step S5, the downloader 16 stores the multiplexed stream file in at least any one of the DLT 21, the HDD 22 and the network 23 through the writer 20.

In this way, the studio-side authoring system 10 ends the process.

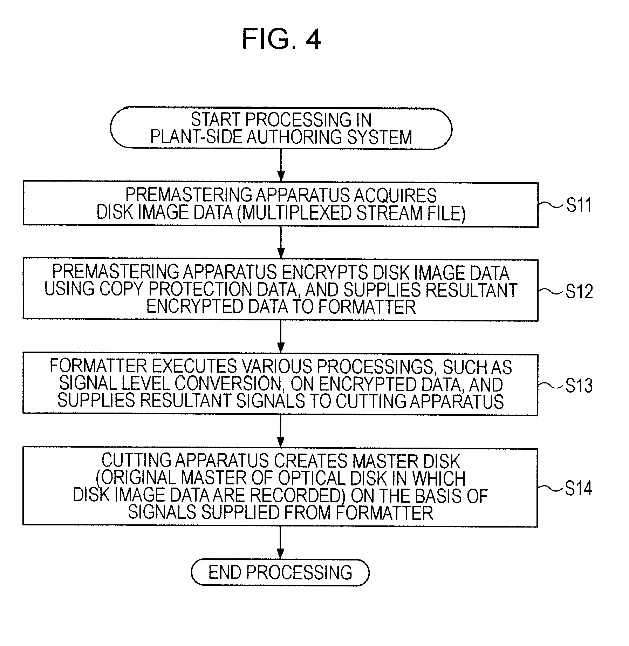

Next, the plant-side authoring system will be described with reference to FIG. 3. FIG. 3 is a block diagram that shows an example of the configuration of the authoring system installed at a plant side (hereinafter, referred to as "plant-side authoring system"). As shown in FIG. 3, the plant-side authoring system 30 is, for example, formed of a premastering apparatus 31, a formatter 32 and a cutting apparatus 33. Hereinafter, an example of the process executed in the plant-side authoring system will be described with reference to the flowchart of FIG. 4.

In step S11, the premastering apparatus 31 acquires disk image data (multiplexed stream file that contains encoded video data D2 of FIG. 8, which will be described later) output from the downloader 16 in FIG. 1 and supplied through any one of the DLT 21, the HDD 22 and the network 23.

Subsequently, in step S12, the premastering apparatus 31 encrypts the acquired disk image data using copy protection data that are externally given, and then supplies the resultant encrypted data to the formatter 32.

In step S13, the formatter 32 executes various processings, such as signal level conversion, on the supplied encrypted data, and then supplies the resultant signals to the cutting apparatus 33.

In step S14, the cutting apparatus 33 creates a master disk 34 (original master 34 of an optical disk in which disk image data are recorded) on the basis of the signals supplied from the formatter 32.

In this way, the plant-side authoring system 30 ends the process.

Incidentally, in an existing art, in order to efficiently carry out encoding, distributed encoding is employed. In the distributed encoding, a plurality of encoders are provided, and video data are equally divided for the number of the encoders to execute parallel processing. With the distributed encoding, it is possible to reduce processing time associated with complex and diverse calculation processes and, therefore, it is possible to achieve efficient authoring operation.

When the above distributed encoding is carried out, as described above, it may be necessary to determine division points on video data, at which video data can be equally distributed to the provided encoders, and then divide the video data at the division points. However, it is difficult to set division points even at any portions of video data. Portions that do not influence image quality should be set as division points. Then, to determine division points that do not influence the image quality, it may be necessary to search for candidate division points that are dividable without influencing the image quality as a preprocess prior to encoding.

In addition, for example, when encoding target video data are recorded in 2-3 pulldown format, or the like, the video data include repeated images. Thus, in order to efficiently use limited disk capacity, it is desirable that the repeated image pattern is detected as a preprocess, as well as the detection of candidate division points, and then the repeated images are skipped in encoding.

On the other hand, in an existing authoring system that executes image compression of a high processing load, such as an AVC codec, with a single or a plurality of processing apparatuses, it has been necessary to separately carry out capturing of video data, its associated control of a video data recording device and preprocess/compression, such as detection of candidate division points and detection of pulldown pattern of the video data. In such an existing authoring system, it has taken several times (about three times) the processing time in actual time of a codec compression apparatus that is able to carry out compression in real time.

Then, in the information processing apparatus according to the present embodiment, the characteristic of processing target video data, that is, extracting the characteristic of encoding target video data, which at least include detection of candidate division points, is carried out while the VTR is controlled at the time of capturing video data. Then, those pieces of extracted characteristic information are stored in a data server in advance, and these pieces of information are referred to when conditions are set for encoding to thereby make it possible to efficiently carry out encoding.

Hereinafter, first, the configuration of the video data capturing apparatus to which the information processing apparatus according to the present embodiment is applied and an example of the process executed in the video data capturing apparatus will be described, and then a method of utilizing the characteristic information extracted at the time of capturing video data for encoding will be described.

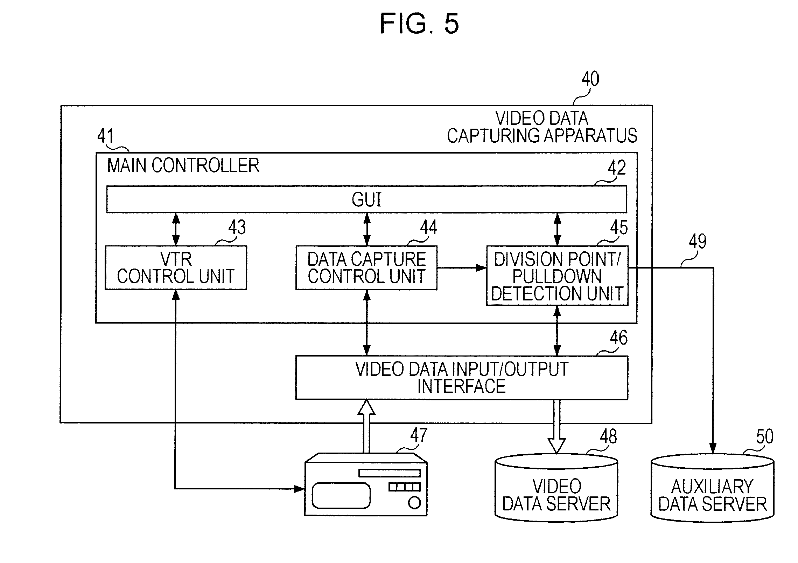

FIG. 5 is a block diagram that shows an example of the configuration of the video data capturing apparatus. The information processing apparatus according to the present embodiment controls a reproducing device to check video data at the time of capturing video data while extracting the characteristic of the video data. That is, the video data capturing apparatus 40 shown in FIG. 5, on the basis of control executed by a main controller 41, acquires video data transmitted from a video tape recorder (VTR) 47 through a video data input/output interface 46, extracts the characteristic of the video data, which will be described later, and then stores the video data in a video data server 48. In addition, the video data capturing apparatus 40, under control executed by the main controller 41, records the characteristic information extracted from the video data in an auxiliary data server 50 through a network 49. Hereinafter, this will be described in greater detail.

The main controller 41 is formed of a computer assigned as the video data capturing apparatus 40 to control overall operation of the video data capturing apparatus 40.

Specifically, for example, as shown in FIG. 5, the main controller 41 manages a graphical user interface (GUI) 42 to accept an operation of an operator (not shown), and controls operation of a VTR control unit 43, a data capture control unit 44 and a division point/pulldown detection unit 45 that are managed by the GUI 42. Thus, the main controller 41 acquires encoding target video data transmitted from the VTR 47, and extracts the characteristic of the video data. Then, the main controller 41 stores the encoding target video data in the video data server 48 through the video data input/output interface 46. In addition, the main controller 41 records the characteristic information acquired from the video data in the auxiliary data server 50 through the network 49.

Specifically, the GUI 42 of the main controller 41 manages three programs, that is, a VTR control program of the VTR control unit 43, a data capture control program of the data capture control unit 44, and a division point/pulldown detection program of the division point/pulldown detection unit 45.

In addition, the VTR control unit 43 accepts an operation of an operator (not shown) through the GUI 42, and controls playing of the VTR 47. When time information, that is, a start point (start time code) and an end point (end time code), in regard to video data is set by the operator through the GUI 42, the VTR control unit 43 controls playing, such as fast forwarding or rewinding, of the VTR 47 on the basis of the time information. Then, on the basis of the process in the VTR control unit 43, the data capture control unit 44 captures video data into the main controller 41 through the video data input/output interface 46. The data capture control unit 44, under control for playing the VTR 47 by the VTR control unit 43 in this way, captures desired encoding target video data through the video data input/output interface 46.

In addition, the division point/pulldown detection unit 45 extracts and detects the characteristic information in regard to the video data captured into the main controller 41 as described above. Specifically, for carrying out distributed encoding, at least candidate division points, at which video data can be divided without influencing image quality, are detected. In addition, the characteristic related to the repeat pattern of images present in 2-3 pulldown video data, or the like, is extracted as other characteristic information.

The thus configured video data capturing apparatus in the information processing apparatus according to the present embodiment specifically executes the following process.

That is, when the VTR control unit 43 on the main controller 41 of the video data capturing apparatus 40 controls the VTR on the basis of the capturing start point and capturing end point that are set through the GUI 42 by the operator to determine video data to be captured, the data capture control unit 44 captures the video data through the video data input/output interface 46.

When the video data are captured into the main controller by the VTR control unit 43 and the data capture control unit 44, the captured video data are transferred to the division point/pulldown detection unit 45 and then the characteristic is extracted. In addition, on the other hand, encoding target video data that are not transferred to the division point/pulldown detection unit 45 but only captured into the video data server 48 are output to the video data input/output interface. Thus, the video data transmitted to the division point/pulldown detection unit 45 by the data capture control unit 44 are data that are transmitted only for extracting characteristic. By so doing, it is possible to avoid an increase in processing time.

In the division point/pulldown detection unit 45, for carrying out distributed encoding, at least the characteristic of candidate division points, at which video data can be divided without influencing image quality, is extracted and detected. In addition, in the division point/pulldown detection unit 45, together with detection of division points, the characteristic related to image pattern of the encoding target video data is extracted as characteristic information. Specifically, when the encoding target video pattern is a 2-3 pulldown material, patterns that contain a repeat frame are also detected. Note that repeated image pattern is not only limited to the image pattern present in 2-3 pulldown video data but also includes the repeated image pattern of video data that are not subjected to 2-3 pulldown process.

In this manner, at the time of capturing video data, when the characteristic information, such as candidate division points and the repeated image pattern of, for example, 2-3 pulldown format are detected, these pieces of characteristic information are stored in the auxiliary data server 50 connected to the network 49. On the other hand, data to be stored in the video data server 48 are transmitted from the data capture control unit 44 separately from data output to the division point/pulldown detection unit 45, and stored in the video data server 48 through the video data input/output interface 46. Then, the stored video data are subjected to encoding in the video signal processing apparatus 14 of the studio-side authoring system 10. The encoding will be described later in detail.

The information processing apparatus according to the present embodiment employs a method of carrying out distributed encoding in which video data are divided into a plurality of pieces and the pieces are respectively allocated to separate encoders to carry out compression in order to reduce processing time associated with divergent encoding. Then, division points for distributed processing are detected at the time of capturing encoding target video data as described above.

That is, at the time of capturing video data, the VTR 47 is controlled on the basis of the GUI 40 operated by the operator, while extracting candidate division points of video data and the repeated image pattern of, for example, 2-3 pulldown video data in the division point/pulldown detection unit 45.

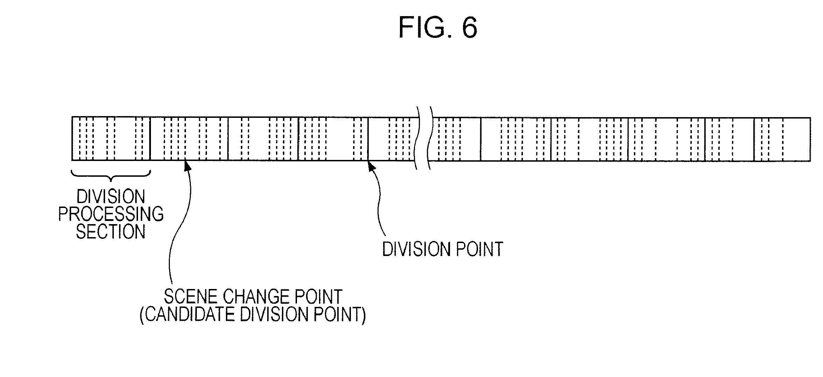

Here, candidate division points will be described with reference to FIG. 6. FIG. 6 is a conceptual view related to a candidate division point and a division point.

It is not allowed to set a division point even at any portion of video data. It may be necessary to search for and determine points that do not influence image quality in advance as a preprocess for distributed encoding. An example of a specific division point may be a scene change point in video data.

The scene change point is a boundary portion between scenes. Thus, even when video data are divided at this point and then the preceding and following frames are encoded by different encoders, it rarely influences image quality. Then, a large luminance change generally appears at the scene change point. Therefore, it is possible to easily detect the scene change in such a manner that the preceding scene and the following scene are compared to check a change in luminance between the preceding and following scenes.

Therefore, the scene change point is determined as a candidate division point, and a change in luminance between the preceding and following scenes is extracted to thereby make it possible to easily detect a candidate division point that does not influence image quality. In this manner, by using a change in luminance, a candidate division point is detected from video data between a start point and an end point.

In FIG. 6, a scene change point is determined as a candidate division point, and a plurality of candidate division points, detected using a change in luminance as described above, are shown. In distributed encoding, by referring to the candidate division points, video data are divided at substantially equal intervals on the basis of the total number of encoders installed through a network, and then the divided points are set as division points. In addition, as shown in FIG. 6, each interval between the division points is a division processing section processed by each encoder connected through the network.

Next, extracting the characteristic related to repeated image pattern of the encoding target video data will be described by specifically describing an example in which the pulldown pattern (repeat pattern) of 2-3 pulldown video data is detected.

In the information processing apparatus according to the present embodiment, while detecting the above described candidate division points, repeated image pattern is extracted as characteristic information when the repeated image pattern is present in processing target video data. For example, when the encoding target video data are 2-3 pulldown data, 2-3 pulldown repeat patterns are extracted and detected. Hereinafter, repeated image pattern in encoding target video data will be described by describing an example of repeat patterns in 2-3 pulldown video data.

Here, the 2-3 pulldown process periodically repeats the same field image in order to convert 24 frame per second (fps) data into 30 fps NTSC TV video signals. The phase of the pulldown pattern is determined when converted into NTSC video data. In many cases, converted patterns are regular. Note that one frame of video data consists of two fields, and a first field (1st field) is termed a top field (top_field) and a second field (2nd field) is termed a bottom field (bottom_field).

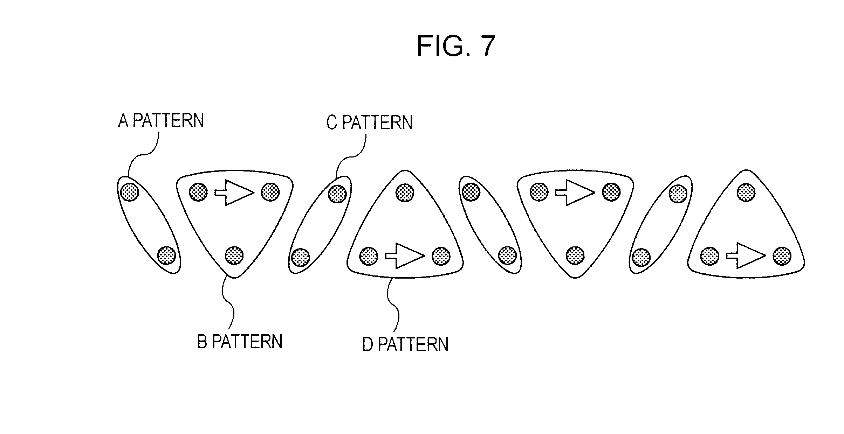

FIG. 7 is a conceptual view of 2-3 pulldown video data. If video data are encoded without taking into consideration pulldown data, field data copied in B pattern and D pattern in FIG. 6, that is, repeated image patterns, are also encoded. This may cause a large loss of disk capacity. In order to efficiently use limited disk capacity, it may be necessary to carry out encoding by skipping the copy fields. Thus, at the time of encoding, the characteristic of pulldown pattern should be detected beforehand, and it may be necessary to store the characteristic information so that the characteristic information is usable at the time of encoding.

The information processing apparatus according to the present embodiment detects pulldown pattern when capturing video data, as described above. Then, the detected pulldown pattern information is stored in the auxiliary data server 50 beforehand. Thus, when encoding is carried out, repeated fields are skipped on the basis of the pattern information to improve the efficiency at which video data are compressed while making it possible to efficiently use limited disk capacity.

Specifically, an example of a method of detecting copy fields within 2-3 pulldown video data may be, for example, such that, in regard to captured encoding target video data, the preceding and following frames are compared to detect patterns that include a repeat frame on the basis of a differential in top field and bottom field between a current frame and a preceding frame. Note that this detecting method is an example, and the method of detecting copy fields is not limited to this.

As described above, the division point/pulldown detection unit 45 of the video data capturing apparatus 40 extracts the characteristic information that at least contains candidate division points of encoding target video data. In addition, as described above, the characteristic of video data to be extracted also includes information related to repeated image pattern in the video data, for example, repeat patterns in 2-3 pulldown video data. Then, the extracted information is recorded in the auxiliary data server 50 through the network 49. In addition, on the other hand, the video data are stored in the video data server 48 through the video data input/output interface 46 to proceed to encoding. Then, when a plurality of encoders are used for encoding, video data are divided in accordance with the total number of the encoders on the basis of the characteristic extracted at the time of capturing video data, and then distributed encoding is executed in the encoders. In addition, copy fields in 2-3 pulldown format are skipped to carry out encoding.

In an existing authoring system that carries out image compression of a high processing load, such as an AVC codec, with a single or a plurality of processing apparatuses, it has been necessary to separately execute capturing of video data, its associated control of a video data recording device and preprocess/compression of the video data. Thus, it has been taking enormous amounts of processing time.

In contrast, as described above, according to the authoring system that suitably uses the information processing apparatus according to the present embodiment, which detects candidate division points or repeated image pattern at the same time with capturing video data while controlling the VTR as a preprocess for encoding, it is possible to greatly reduce the processing time of video data compression in the authoring process in comparison with the existing authoring system, or the like.

In addition, information related to repeated image patterns are also extracted at the time of capturing the encoding target video data, that is, as a preprocess for encoding. Thus, it is possible to reduce processing time, and also it is possible to efficiently carry out encoding with no loss.

Next, specific encoding of video data captured while extracting the characteristic as described above will be described including a method of using the extracted information with reference to FIG. 8 to FIG. 10.

FIG. 8 is a block diagram that shows an example of the configuration of the video signal processing apparatus 14 in the studio-side authoring system 10. As shown in FIG. 8, the video signal processing apparatus 14, for example, includes a main controller 60, an encoder 67 and a monitoring device 69. In addition, the video signal processing apparatus 14 is connected to the video data server 48 and a data compression server 70 through the network 19.

As described above, in step S1 in the flowchart of FIG. 2, the editing list is supplied from the authoring application execution apparatus 18 to the video signal processing apparatus 14. Specifically, when the video data are captured into the above described video data capturing apparatus 40, candidate division points and the characteristic information of repeat patterns in 2-3 pulldown format are detected and then the video data are stored in the video data server 48. After that, the video data server 48 provides an input video data file to the video signal processing apparatus 14 in accordance with the editing list notified by the authoring application execution apparatus 18, and outputs processing target video data D1 to the encoder 67. At the same time, the editing list is supplied to the main controller 60 of the video signal processing apparatus 14.

The encoder 67 switches its operation in accordance with various encoding conditions notified from the authoring application execution apparatus 18 through the main controller 60, and carries out encoding on the video data D1 output from the video data server 48 by means of, for example, an MPEG method. At this time, setting various encoding conditions are variable-controlled by the main controller 60 to control the amount of bits generated by the encoder 67.

In addition, the encoder 67 provides the encoding result to the main controller 60. Thus, the main controller 60 is able to detect a picture type used in encoding of the encoder 67 and the amount of bits generated in encoding frame by frame.

Furthermore, when the encoder 67 employs two-pass encoding applied in the present embodiment, the encoder 67 carries out both first-pass encoding and second-pass encoding.

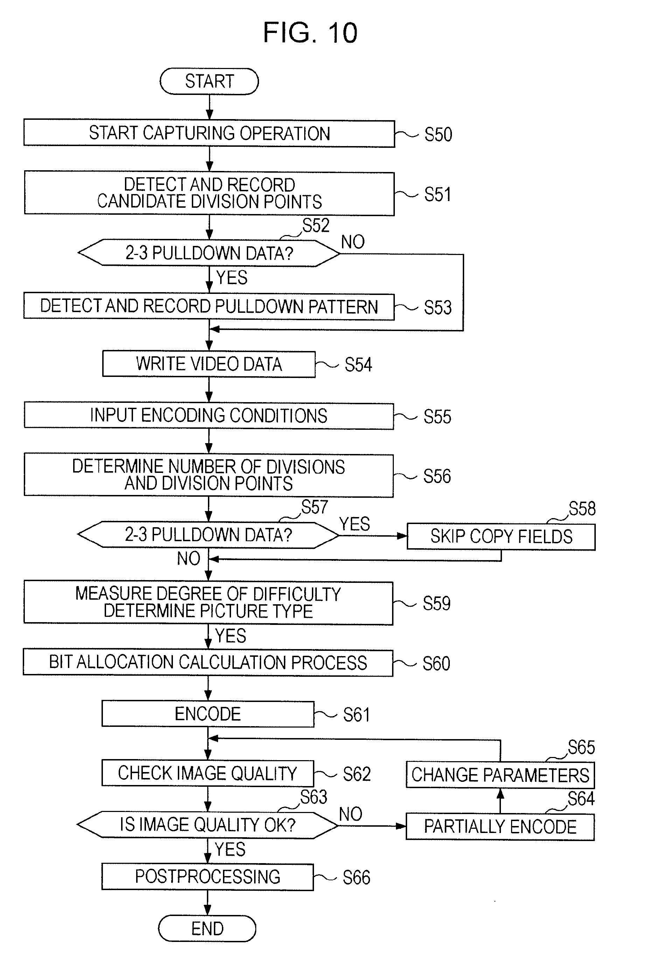

More specifically, for example, in order to set the encoding conditions used in the second-pass encoding beforehand, the encoder 67 carries out the first-pass encoding, that is, for example, encoding of portion of step S59 in the flowchart of FIG. 10, which will be described later. In the first-pass encoding, the encoder 67 allocates picture types in its own internal process, and uses the allocated picture types to carry out the first-pass encoding on the video data D1. Then, on the basis of the results of the first-pass encoding, the encoder 67 notifies the encode manager 62 of, for example, the picture type, the amount of bits generated, and the like, of each frame.

On the other hand, in the second-pass encoding, that is, for example, the encoding in step S61 of the flowchart of FIG. 10, which will be described later, the encoder 67 executes the following process. That is, the encoder 67 specifies the picture type and target amount of bits of each frame, set by the main controller 60, to carry out the second-pass encoding on the video data D1 and then stores the resultant encoded video data D2 in the data compression server 70 through the network 19. At this time, the encoder 67 notifies the main controller 60 of the data size, and the like, of the encoded video data stored in the data compression server 70.

Note that the two-pass encoding will be described later in detail using the flowchart of FIG. 10.

The monitoring device 69 is, for example, formed of a display device, and displays a picture corresponding to the video data expanded from the encoded video data D2, recorded in the data compression server 70, by the decode control unit 66. That is, under the control executed by the main controller 60, the decode control unit 66 expands the encoded video data D2 recorded in the data compression server 70, and then supplies the resultant video signals to the monitoring device 69. The monitoring device 69 displays a picture corresponding to the supplied video signals, that is, a picture corresponding to the encoded video data D2.

Thus, the operator is able to check the processing results of the encoder 67 by the monitoring device 69 where necessary. That is, the video signal processing apparatus 14 is able to preview the processing results of the encoder 67 using the monitoring device 69. Furthermore, the operator is able to operate the main controller 60 through the GUI 61 on the basis of the previewed results to minutely change the detailed conditions of various types of encoding.

The main controller 60 is, for example, formed of a computer assigned to the video signal processing apparatus 14. The main controller 60 carries out data communication with the authoring application execution apparatus 18 through the network 19 to control the overall operation of the video signal processing apparatus 14.

Here, as described above, the video signal processing apparatus 14 of the authoring system to which the information processing apparatus according to the present embodiment is applied employs distributed encoding in which encoding target video data are divided into a plurality of units and then the divided units are respectively allocated to a plurality of encoders for encoding. In this way, by employing the distributed encoding, it is possible to greatly reduce processing time resulting from diverse encodings.

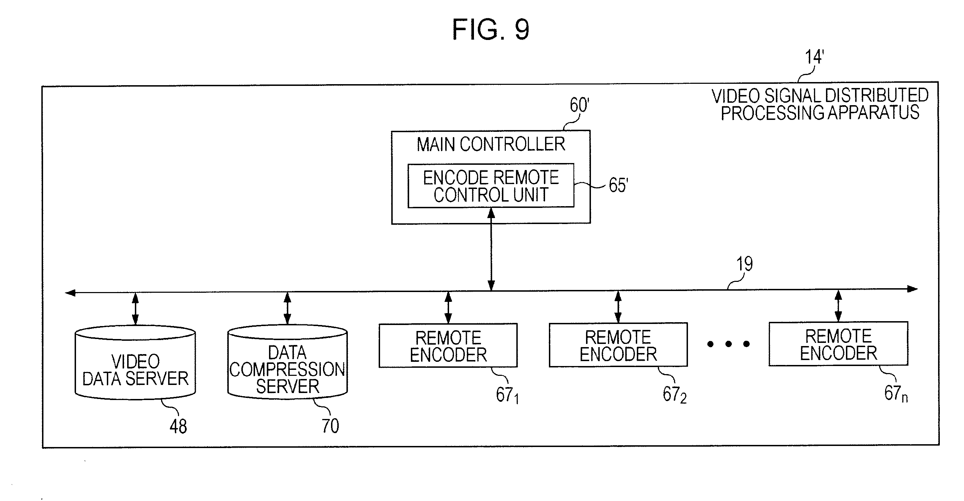

FIG. 9 is a block diagram that shows an example of the configuration of a video signal distributed processing apparatus that employs distributed encoding in which divided pieces of video data are allocated to a plurality of encoders to carry out encoding. As shown in FIG. 9, the video signal distributed processing apparatus 14' includes a main controller 60' and remote encoders $67_1$ to $67_n$ that are connected to the main controller 60' through the network 19. In addition, the main controller 60' is connected to the video data server 48 and the data compression server 70 through the network 19. The video data server 48 stores captured encoding target video data. The data compression server 70 stores encoded video data D2 processed respectively by the remote encoders.

In addition, the main controller 60' of the video signal distributed processing apparatus 14' includes an encode remote control unit 65'. The encode remote control unit 65' controls encoding of each of the remote encoders $67_1$ to $67_n$ that are connected through the network 19.

Then, the main controller 60' of the video signal distributed processing apparatus 14' and the encode remote control unit 65' of the main controller 60', which are shown in FIG. 9, respectively correspond to the main controller 60 and the encode control unit 65 of the main controller 60 in the video signal processing apparatus 14 shown in FIG. 8. That is, the main controller 60' carries out data communication with the authoring application execution apparatus 18 through the network 19 to control the overall operation of the video signal distributed processing apparatus 14' including the remote encoders $67_1$ to $67_n$.

Thus, FIG. 8 only shows the single encoder 67; however, the single encoder 67 may be regarded as the plurality of remote encoders $67_1$ to $67_n$ connected through the network as shown in FIG. 9. Therefore, hereinafter, an example in which the distributed encoding is carried out using the video signal processing apparatus 14 shown in FIG. 8 will be described.

The main controller 60 of the video signal processing apparatus 14 includes the graphical user interface (GUI) 61, the encode manager 62, the wait control unit 63, the multi-pass control unit 64, the encode control unit 65 and the decode control unit 66, for example, as shown in FIG. 8.

That is, the main controller 60 accepts both the control executed by the authoring application execution apparatus 18 and an operation of the operator through management of the GUI 61, and controls the operation of the encoder 67 using the encode manager 62 and the encode control unit 65 that are managed by the GUI 61.

Thus, the main controller 60 is able to update the detailed condition settings of various types of encoding on the basis of the encoding file. In addition, the main controller 60, for example, controls the encoder 67 to carry out encoding according to the thus set or updated various encoding conditions on the encoding target video data D1. Furthermore, the main controller 60 receives the encoding results, notified from the encoder 67, and notifies the authoring application execution apparatus 18 of the encoding results.

In this way, the main controller 60 controls a video data file in the video data server 48 in accordance with the editing list notified from the authoring application execution apparatus 18 to reproduce a desired editing target. Note that, hereinafter, in order to distinguish from encoding files supplied to other internal apparatuses, the encoding file supplied to the video signal processing apparatus 14 is termed an encoding file VENC.XML.

In the video signal processing apparatus 14 that employs distributed encoding, the wait control unit 63 is provided for the main controller 60. The wait control unit 63 determines the bit rate condition of encoding for each of the encoders 67 (remote encoders $67_1$ to $67_n$) in accordance with the encoding file VENC.XML notified from the authoring application execution apparatus 18, and notifies control data, such as a maximum allocation data size according to the encoding condition, to the multi-pass control unit 64. The multi-pass control unit 64 changes bit allocations set for encoding and set conditions in response to an operation of the operator through the GUI 61.

The multi-pass control unit 64, for example, sets various encoding conditions in accordance with the encoding file VENC.XML notified from the authoring application execution apparatus 18, and notifies the encode control unit 65 of the control data corresponding to the encoding conditions. At this time, the multi-pass control unit 64, for example, is able to change the set various encoding conditions in response to the operation of the operator through the GUI 61.

Encoding conditions set by the multi-pass control unit 64 include, for example, first encoding conditions used in first-pass encoding and second encoding conditions used in second-pass encoding. The first encoding conditions, for example, contain various conditions, and the like, for setting picture types in the internal processing of the encoder 67 when the encoder 67 carries out first-pass encoding. On the other hand, the second encoding conditions, for example, contain the picture type, target bit amount, and the like, of each frame, which are used in second-pass encoding.

The encode control unit 65 controls encoding of each of the encoders 67 (remote encoders $67_1$ to $67_n$) in accordance with the control file notified from the multi-pass control unit 64. In addition, the encode control unit 65 notifies each of the encoders 67 (remote encoders $67_1$ to $67_n$) of the data of the degree of difficulty in encoding frame by frame, and records the compressed encoded video data D2 in the data compression server 70.

In addition, for example, when two-pass encoding, which will be described later, is carried out, the encode control unit 65 executes the following process.

That is, the encode control unit 65 controls first-pass encoding and second-pass encoding of the encoder 67 in accordance with the control file notified from the authoring application execution apparatus 18.

In addition, the encode control unit 65 detects the degree of difficulty in encoding and picture type frame by frame from the results of first-pass encoding by the encoder 67, and notifies the multi-pass control unit 64 of the detected results. The multi-pass control unit 64 uses the notified degree of difficulty and picture type of each frame to set second encoding conditions used in second-pass encoding. Note that the degree of difficulty will be described later.

Furthermore, the encode control unit 65 controls storing the resultant final encoded video data D2 of the second-pass encoding of the encoder 67 in the data compression server 70 through the network 19.

The example of the configuration of the video signal processing apparatus 14 of the authoring system to which the information processing apparatus according to the present embodiment is applied is described above.

Next, the process executed by the information processing apparatus according to the present embodiment will be described including the two-pass encoding in the above described video signal processing apparatus 14 with reference to the flowchart of FIG. 10. Note that, as described above, in order to reduce encoding time, the information processing apparatus according to the present embodiment carries out so-called distributed encoding in which video data are divided into a plurality of units and then the respective units are allocated to separate computing devices for compression.

In step S50, the video data capturing apparatus 40 starts capturing video data. When the operator sets time information, that is, a start point (start time code) and an end point (end time code), through the GUI 42 of the main controller 41 of the video data capturing apparatus 40, the VTR control unit 43 controls playing, such as fast forwarding or rewinding, of the VTR 47 on the basis of the time information. Then, on the basis of the process executed in the VTR control unit 43, the data capture control unit 44 captures video data into the main controller 41 through the video data input/output interface 46.

Then, in step S51, division points of the captured encoding target video data are detected and recorded in a preprocess for encoding. The encoding target video data captured into the main controller 41 through the video data input/output interface 46 are transmitted to the division point/pulldown detection unit 45 inside the main controller 41, and the division point/pulldown detection unit 45 detects candidate division points for carrying out distributed encoding.

To carry out distributed encoding, it is not allowed to set a division point at any portion of video data. It may be necessary to divide video data at division points that do not influence image quality. For example, an example of the division point may be a scene change point in video data. Hereinafter, the description will be made as to an example in which a scene change point is detected as a division point.

A large luminance change generally appears at the scene change point. For this reason, it is possible to detect a scene change in such a manner that the preceding scene and the following scene are compared to check a change in luminance between the preceding and following scenes. Therefore, the scene change point is determined as a candidate division point, and a change in luminance between the preceding and following scenes. Thus, it is possible to easily detect a candidate division point.

In this manner, candidate division points are detected from video data between a start point and an end point.

Then, when candidate division points are detected from the captured encoding target video data, information related to the candidate division points are recorded in the auxiliary data server 50 connected to the video data capturing apparatus 40 through the network 49.

After that, in step S52, it is determined whether the captured encoding target video data are extended in 2-3 pulldown format. When the captured video data are a 2-3 pulldown material (YES in step S52), the process proceeds to step S53.

Specifically, in step S52, when the captured video data are a material in 2-3 pulldown format, the pulldown pattern is detected and recorded in step S53. That is, in step S53, for example, in regard to the captured encoding target video data, the preceding and following frames are compared to detect a pattern that includes a repeat frame on the basis of a differential in top field and bottom field between a current frame and a preceding frame. The thus detected 2-3 pulldown pattern is recorded in the auxiliary data server 50 connected to the network 49 together with information related to the candidate division points, and then the process proceeds to step S54.

On the other hand, in step S52, when the captured video data are not a material in 2-3 pulldown format (NO in step 52), the process directly proceeds to step S54. Note that in the above described example, detection of repeated image pattern caused by 2-3 pulldown process is described; however, it is not limited. That is, even when video data are not subjected to 2-3 pulldown process, if repeated image pattern is present in the video data, it is possible to similarly extract the repeated image pattern, that is, the characteristic.

In step S54, non-compressed video data for which the candidate division points and 2-3 pulldown pattern have been detected in the above steps are written. Specifically, the video data are recorded in the video data server 48 through the video data input/output interface 46 of the video data capturing apparatus 40, and the process proceeds to step S55. In this way, with the information processing apparatus according to the present embodiment, the video data D1 recorded in the video data server 48 in this way are encoded in the video signal processing apparatus 14.

In step S55, encoding conditions are input and set prior to encoding of the video data D1. Specifically, when the video data D1 are supplied from the video data server 48 to the main controller 41 of the video signal processing apparatus 14, the main controller 41 acquires various pieces of information for encoding of the editing target video data D1 from the encoding file VENC.XML supplied from the authoring application execution apparatus 18.

For example, in step S55, information, such as "access (chapter) point", "disk capacity", "start time and end time of the VTR" and "data size allocatable to the video data D1", from among the above described various pieces of information contained in the encoding file VENC.XML is acquired. In addition, the information processing apparatus according to the present embodiment employs distributed encoding, so information related to the total number n of the usable remote encoders $67_1$ to $67_n$ is also acquired.

In step S55, when various pieces of information for encoding are acquired, the process proceeds to step S56.

In step S56, the number of divisions and division points are determined for distributed encoding. As described above, in order to reduce encoding time, the information processing apparatus according to the present embodiment employs distributed processing in which video data are divided into a plurality of units and then the plurality of units are respectively allocated to a plurality of separate encoders. For the distributed encoding, in order to divide encoding target video data supplied from the video data server 48, video data D1 are divided by referring to information related to the candidate division points of video data, detected in step S51 and recorded in the auxiliary data server 50.

That is, in step S55, when the identification names of the remote encoders entered in initial setting process (not shown) or information related to the total number n of remote encoders usable in distributed encoding are acquired, division points at substantially equal intervals will be determined for the remote encoders $67_1$ to $67_n$ as shown in FIG. 6 with reference to the information related to the candidate division points recorded in the auxiliary data server 50.

In this way, the information processing apparatus according to the present embodiment refers to the characteristic information of video data extracted in the preprocess for encoding to set encoding conditions. Thus, in comparison with the existing authoring system that extracts the characteristic information at the stage of encoding, the characteristic has been already extracted in the preprocess, so it is possible to greatly reduce encoding time.

Subsequently, in step S57, it is determined whether the video data D1 on which encoding will be carried out are extended in 2-3 pulldown format. Then, when the video data D1 are 2-3 pulldown data (YES in step S57), the process proceeds to step S58.

In step S58, copy fields are skipped from the video data D1 which are the 2-3 pulldown data. At this time, the process is carried out by referring to the information related to the pulldown pattern of the video data D1, detected in the preprocess for encoding and recorded in the auxiliary data server 50 in step S53.

In this way, in step S58, in order to efficiently use limited disk capacity, copy fields in 2-3 pulldown format are skipped on the basis of the information detected and recorded in the preprocess at the time of capturing video data. Then, the video data of which copy fields are skipped are encoded. Because the information related to the 2-3 pulldown pattern has been determined when encoding is carried out, the information processing apparatus according to the present embodiment is able to reduce processing time and remove a loss of disk capacity to efficiently carry out encoding in comparison with the existing authoring system.

When copy fields in the 2-3 pulldown data are skipped as described above, the process proceeds to step S59.

In addition, in step S57, when the video data on which encoding will be carried out are not extended in 2-3 pulldown format (NO in step S57), the process directly proceeds to step S59.

In step S59, the main controller 60 of the video signal distributed processing apparatus 14 controls each of the encoders 67 ($67_1$ to $67_n$) connected through the network 19, and carries out first-pass encoding according to the first encoding conditions, set by various pieces of information acquired in step S55, on the editing target video data D1. Then, the degree of difficulty in encoding and the picture type are detected frame by frame from the resultant first encoded video data.

Specifically, when the editing target video data D1 divided at substantially equal intervals in step S56 are respectively output to the encoders 67 ($67_1$ to $67_n$), the encoders 67 ($67_1$ to $67_n$) set the picture type of each frame that constitutes the video data D1. That is, each of the encoders 67 ($67_1$ to $67_n$) sets a frame, specified by an instruction from the main controller 60, as an I-picture. Moreover, each of the encoders 67 ($67_1$ to $67_n$) forcibly sets a frame, which is determined as a scene change from the correlation between the preceding and following frames on the basis of the information related to the scene change acquired in step S55, as an I-picture. Then, each of the encoders 67 ($67_1$ to $67_n$) executes a process to set a frame group from the frame set as the I-picture to a frame just before the next I-picture, as a close GOP.

In addition, each of the encoders 67 ($67_1$ to $67_n$) uses the thus set picture type to sequentially carry out first-pass encoding on each of the frames that constitute the video data D1 by means of a fixed quantization step. Then, each of the encoders 67 ($67_1$ to $67_n$) notifies the main controller 60 of the amount of bits generated at that time, that is, the amount of bits generated at the time when each frame is encoded, and notifies the main controller 60 of the picture type of each frame.

The main controller 60 receives the notification from each of the encoders 67 ($67_1$ to $67_n$) and detects the degree of difficulty and picture type frame by frame. That is, the main controller 60 detects the picture type of each frame notified from each of the encoders 67 ($67_1$ to $67_n$) as the picture type of each frame without any change. In addition, the main controller 60 detects (measures) the amount of bits generated in each frame, notified from each of the encoders 67 ($67_1$ to $67_n$), as the degree of difficulty of each frame.

Here, the degree of difficulty in the specification indicates the data size of each encoded frame when encoding by means of a fixed quantization step is carried out on the editing target video data D1.

That is, in interframe encoding (encoding type of P-picture or B-picture), a prediction error (differential) from a prediction frame increases at a fast-moving portion, and a large amount of data may be necessary for reducing degradation in image quality by that much. In addition, in intraframe encoding (encoding type of I-picture), when there are many high-frequency components, higher-order coefficient data are generated by means of discrete cosine transform. Thus, a large amount of data size may be necessary for reducing degradation in image quality by that much. Thus, when encoding is carried out on the video data D1 by means of a fixed quantization step, a large amount of data size is detected at a portion (frame) that has a large amount of data size for reducing degradation in image quality. From the above, the data size of the data of each frame that constitutes the resultant encoded video data D2 obtained by carrying out encoding on the editing target video data D1 by means of a fixed quantization step indicates the degree of difficulty of each of the frames.

When a series of the above processes in step S59 ends, the process proceeds to step S60. In step S60, the main controller 60 executes bit allocation calculation process using the degree of difficulty and picture type that are detected frame by frame in step S59, and sets a target bit amount frame by frame.

Here, the bit allocation calculation process, for example, means a calculation process in which the target bit amount of overall encoded video data D2 that are obtained when the second-pass encoding is carried out on the editing target video data D1 is allocated to each of the frames using the degree of difficulty and picture type of each frame detected in step S59.

That is, in step S60, the main controller 60 calculates a total bit amount TOTAL_SUPPLY that is actually allocatable to the video data D1 (encoded video data D2).

$$\text{TOTAL\_SUPPLY} = \text{TOTAL\_BYTES} - \text{TOTAL\_HEADER} \qquad (1)$$

In mathematical expression (1), TOTAL_BYTES denotes "data size allocatable to the video data D1" acquired in step S55, and corresponds to a target data size of overall encoded video data D2 recorded in the file server 17 in the network 19. In addition, TOTAL_HEADER denotes a data size of additive data, such as a header, within the encoded video data D2, and is a data size specified by the total number of GOPs.

Thus, the main controller 60 calculates a data size allocatable to data other than additive data within the encoded video data D2 as a total bit amount TOTAL_SUPPLY that is actually allocatable to the video data D1 through calculation of mathematical expression (1).

Next, the main controller 60 distributes the total bit amount TOTAL_SUPPLY actually allocatable to the video data D1 to the respective encoding units. Note that, hereinafter, the data size of each encoding unit distributed in this way is termed a target bit amount of the corresponding encoding unit, and is referred to as SUPPLY_BYTES.

In addition, the main controller 60 calculates the sum of the degrees of difficulty (difficulty detected in step S59) of the frames belonging to the corresponding encoding unit for each of the encoding units. Note that, hereinafter, the degree of difficulty of each frame is referred to as DIF, and the sum of the degrees of difficulty DIF is referred to as DIF_SUM.

Subsequently, the main controller 60 calculates evaluation function for distributing bits by GOPs for each of the encoding units. Here, the evaluation function is, for example, expressed by the following mathematical expression (2).

$$Y = BX \qquad (2)$$

In mathematical expression (2), Y denotes a target bit amount SUPPLY_BYTES of an operation target encoding unit, and X denotes the sum DIF_SUM of the degrees of difficulty DIF of frames belonging to an operation target encoding unit.

When the main controller 60 sets the evaluation function of mathematical expression (2) in this way, that is, when the main controller 60 calculates a coefficient B in the evaluation function of mathematical expression (2), the main controller 60 sequentially executes calculation of the following mathematical expression (3), which uses the coefficient B, for each of the encoding units.

$$GOP\_TGT = B \times GOP\_DIF\_SUM \qquad (3)$$

Note that, in mathematical expression (3), GOP_DIF_SUM denotes the sum of the degrees of difficulty DIF of the frames belonging to an operation target GOP. In addition, GOP_TGT denotes a target bit amount of an operation target GOP.

That is, the target bit amount GOP_TGT of an operation target GOP indicates a data size allocated to the operation target GOP in accordance with the sum of the degrees of difficulty GOP_DIF_SUM of an operation target GOP within the target bit amount SUPPLY_BYTES of an encoding unit that contains the operation target GOP.

The main controller 60 executes a process of allocating the target bit amount GOP_TGT of a target GOP to the respective frames belonging to the target GOP to set the target bit amount of each frame.

The above described series of processes is a bit allocation calculation process executed in step S60. In this way, in the bit allocation calculation process in step S60, a target bit amount, which is one of the second encoding conditions used in second-pass encoding, is set by referring to the first-pass encoding results (the results in step S59).

In this way, when step S60 ends, the process proceeds to step S61. In step S61, the main controller 60 sets the second encoding conditions that at least contain the target bit amount of each frame, set through the bit allocation calculation process in step S60, and the picture type of each frame detected in step S59, and carries out encoding (carries out second-pass encoding).

Then, in step S62, the main controller 60 previews the second encoded video data D2 that should be obtained when the second-pass encoding according to the second encoding conditions is carried out on the editing target video data D1 to check the image quality.

The previewing in step S62 is, for example, the following series of processes. That is, as described above, the video data server 48 supplies the editing target video data D1 to each of the encoders 67 ($67_1$ to $67_n$) in response to the control executed by the main controller 60 on the basis of an operator's operation of GUI 61. Each of the encoders 67 ($67_1$ to $67_n$) once encodes the video data D1 in accordance with the second encoding conditions, and decodes again the resultant encoded video data D2 without outputting the data D2 to the network 19, and then supplies the resultant video signals to the monitoring device 69. The monitoring device 69 displays a picture corresponding to the video signals. That is, a picture corresponding to the second encoded video data D2, which should be obtained when the second-pass encoding according to the second encoding conditions is carried out on the editing target video data D1, are displayed on the monitoring device 69 as a preview picture.

In this way, the encoded video data D2 through the second-pass encoding are previewed, and image quality is checked, and then the process proceeds to step S63.

In step S63, the main controller 60 determines whether operator's image quality evaluation is "OK". That is, the operator evaluates the image quality of a preview picture displayed on the monitoring device 69, that is, a picture corresponding to the encoded video data D2, in step S62, and inputs the evaluated result into the main controller 60 by operating the GUI 61. For example, when the operator satisfies the image quality to issue an instruction for starting second-pass encoding by operating the GUI 61, it is determined in step S63 that the operator's image quality evaluation is "OK" (YES in step S63), the process proceeds to step S66.

In step S66, the main controller 60 stores the encoded video data D2 in the data compression server 70 through the network 19 by two-pass encoding, and executes postprocess, such as notifying the authoring application execution apparatus 18 of the results of the second-pass encoding. In this way, when the postprocess is complete in step S66, the encoding ends.

In contrast, when the operator does not satisfy a preview picture displayed on the monitoring device 69 through the previewing in step S62, that is, the image quality of the picture corresponding to the encoded video data D2 before stored in the data compression server 70 and, for example, operates the GUI 61 to select change or correction, it is determined in step S63 that the operator's image quality evaluation is not "OK" (NO in step S63), and then the process proceeds to step S64.

In step S64, the main controller 60 changes parameters in second-pass encoding.

Specifically, the main controller 60 partially changes encoding conditions in response to an operator's operation of GUI 61 to partially change the image quality. In addition, the main controller 60 executes the same bit allocation calculation process as the above step S60 again to update partial settings of the target bit amount of the video data D1 desired for correction or change. Note that in the bit allocation calculation process in step S64, the results of partial image quality change according to the immediately preceding change in encoding conditions are used.

In this way, in step S64, when the encoding conditions, and the like, of portion of video data desired for correction or change are changed, the process proceeds to step S65. Then, partial re-encoding is carried out on the video data, of which the encoding conditions are partially updated, through second-pass (first-pass depending on encoding conditions) encoding.

The partial re-encoding is carried out on the division processing section shown in FIG. 6, which includes a portion desired for change or correction, as an unit. Then, the partially encoded division processing section is replaced to combine compression data.

Here, a unit processed in partial encoding will be described in greater detail. The encoder has the function of limiting the occupancy of a buffer at predetermined intervals in consideration of usability at the time of partial encoding. Owing to the above function, even when separately encoded streams are combined, the occupancy of a buffer does not collapse at a combining point. A buffer reset point that is inserted at predetermined intervals is called a RAP (Random Access Point).

The most efficient division encoding units when distributed encoding is carried out using a plurality of encoders as described above is a shortest section between RAPs, which includes a section with which data are replaced. However, in re-encoding between the above RAPs, a buffer occupancy control function in consideration of combining of streams works. Thus, the amount of bits generated is suppressed and, as a result, a decrease in image quality occurs. Thus, in the information processing apparatus according to the present embodiment, in order to avoid the above image-quality deterioration problem, the encoder sets a section, at which partial encoding is carried out again, not to the above described minimum section between RAPs but to a distributed encoding section that includes a section for change or correction. That is, partial encoding is carried out in units of division points determined by referring to dividable candidate division points serving as the characteristic information extracted at the time of capturing encoding target video data. Thus, it is possible to achieve image quality equivalent to image quality before partial encoding for change or correction is carried out. Hence, it is possible to remove the image-quality deterioration problem.

In step S65, when the above described partial encoding is carried out, the process proceeds to step S62 to repeat the following processes.

The example of the process executed by the information processing apparatus according to the present embodiment is described above. In this way, for carrying out distributed encoding, the information processing apparatus according to the present embodiment, as a preprocess at the time of capturing encoding target video data, detects, for example, scene change portions as candidate division points, further detects repeated image pattern in, for example, 2-3 pulldown video data, and then records the detected these pieces of characteristic information of the video data in the auxiliary data server 50.

The existing authoring system, or the like, automatically detects these candidate division points and repeated image pattern at the time when encoding conditions are set or at the time of measuring the degree of difficulty when two-pass encoding is carried out. That is, in the existing authoring system, it may be necessary to separately carry out capturing of video data, its associated control of a video data recording device and preprocess/compression of video data. Thus, it is difficult to carry out compression in real time, taking a large amount of processing time.

In contrast, with the information processing apparatus according to the present embodiment, information related to candidate division points and/or characteristic information related to repeated image pattern, or the like, are detected in the preprocess for encoding while controlling a reproducing device at the time of capturing video data. Then, the video data from which the characteristic has been extracted are recorded in the video data server, and the detected information is recorded in the auxiliary data server. Thus, it is possible to efficiently encode captured video data D1 in real time, and it is possible to carry out authoring several times faster as compared with the existing authoring system, or the like. In addition, within limited disk capacity, effective encoding may be executed with no loss with reduced processing time.

Here, the above described series of processes may be executed by hardware and may also be executed by software.

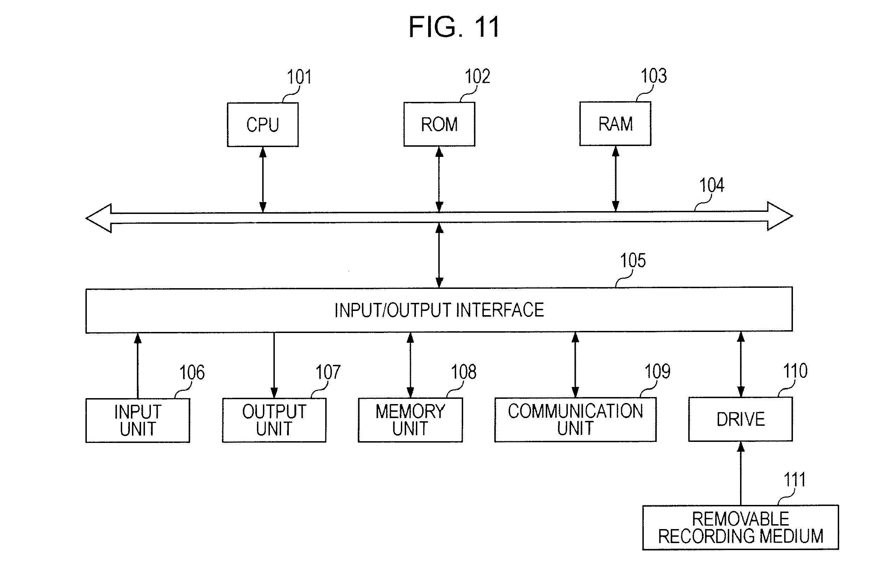

When the above described series of processes are executed by software, the entire studio-side authoring system 10 shown in FIG. 1 or portion thereof may be formed of a computer, for example, shown in FIG. 11. Note that portion of the studio-side authoring system 10 may be, for example, the entire of the video data capturing apparatus 40 shown in FIG. 5 or may be portion of the video data capturing apparatus 40, that is, for example, the main controller 41, or the like.

In FIG. 11, a CPU (Central Processing Unit) 101 executes various processes in accordance with a program recorded in a ROM (Read Only Memory) 102 or a program loaded from a memory unit 108 to a RAM (Random Access Memory) 103. The RAM 103 also stores data for the CPU 101 to execute various processes where necessary.

For example, when the main controller 41 of FIG. 5 is formed of the computer of FIG. 11, the VTR control unit 43, the data capture control unit 44, the division point/pulldown detection unit 45, and the like, may be formed of a program executed by the CPU 101.

The CPU 101, the ROM 102 and the RAM 103 are connected to each other through a bus 104. An input/output interface 105 is also further connected to the bus 104. An input unit 106, an output unit 107, the memory unit 108 and a communication unit 109 are connected to the input/output interface 105.

The input unit 106 is, for example, formed of an input device, such as a touch panel that also serves as a display unit of the output unit 107, a keyboard, a remote controller that includes a light-receiving unit, and a mouse.

The output unit 107 is, for example, formed of a discrete display unit, such as a display, a discrete audio output unit, such as a speaker and a headphone output terminal, or a combination of them.

The memory unit 108 is, for example, formed of a hard disk, or the like. In addition, the communication unit 109 is, for example, formed of a modem, a terminal adapter, a wireless communication device, or the like, to control communication with another information processing apparatus. For example, when the main controller 41 of FIG. 5 is formed of a computer of FIG. 11, the communication unit 109 controls communication with the auxiliary data server 50 through the network 49.

A drive 110 is, where necessary, connected to the input/output interface 105, and a removable recording medium 111, such as a magnetic disk, an optical disk, a magneto-optical disk, or a semiconductor memory, is loaded where appropriate, and then a computer program read from them is installed in the memory unit 108 where necessary.

Incidentally, when the above described series of processes are also executed by software, a program that constitutes the software is installed in a computer integrated in exclusive hardware or in, for example, a general-purpose personal computer that can execute various functions by installing various programs, through a network or from a recording medium.

As shown in FIG. 11, the recording medium that contains the above program is not only formed of, other than the apparatus body, a removable recording medium (packaged media) 111 which is distributed for providing a program to a user and in which a program is recorded, such as a magnetic disk (including floppy disk), an optical disk (including CD-ROM (Compact Disk-Read Only Memory) and DVD (Digital Versatile Disk)), a magneto-optical disk (MD (Mini-Disk)) or a semiconductor memory, but also the ROM 102 or the hard disk of the memory unit 108, which are provided for a user in a state of being incorporated in the apparatus body and in which a program is recorded.

As described above, at the time of capturing encoding target video data, the characteristic information that is at least related to candidate division points of the video data is extracted and stored in advance, and then, in setting encoding conditions, division points of video data for distributed encoding are determined by referring to the stored characteristic information. Thus, in comparison with the existing authoring system in which capturing of video data and preprocess/compression of video data are separately carried out, it is possible to greatly reduce processing time.

In addition, similarly, as the preprocess for encoding at the time of capturing video data, not only the above described candidate division points but also characteristic information related to repeated image pattern is extracted. Thus, it is possible to reduce processing time while implementing efficient encoding with limited disk capacity.

Note that the embodiment of the invention is not limited to the above described embodiment; it may be modified into various forms without departing from the scope of the invention.

For example, when the above described series of processes are executed by software as well, a program that constitutes the software is installed into a computer integrated with exclusive hardware through a network or from a recording medium. Alternatively, the above program is installed into, for example, a general-purpose personal computer, or the like, that is able to execute various functions by installing various programs.

In addition, a recording medium that contains such a program is distributed separately from the apparatus body in order to provide the program for a user. The recording medium is, for example, a removable recording medium (packaged media) in which a program is recorded, such as a magnetic disk (including floppy disk), an optical disk (including CD-ROM and DVD), a magneto-optical disk (MD) or a semiconductor memory. In addition, the recording medium may be formed of a ROM or a hard disk, which is provided for a user in a state of being incorporated in the apparatus body and in which a program is recorded.

Note that in the specification, the steps described with reference to the flowchart not only include a process that is carried out in time sequence in the stated order but also include a process that is not carried out in time sequence but carried out in parallel or alone.

The present application contains subject matter related to that disclosed in Japanese Priority Patent Application JP 2008-103981 filed in the Japan Patent Office on April 11, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

**Claims**

1. An information processing apparatus comprising:

 a data capturing unit that controls playing of a recording medium in which video data are recorded and that captures encoding target data;
 a characteristic extraction unit that receives the encoding target data and that extracts a characteristic point, which at least includes a dividable point, of the encoding target data as a preprocess for encoding;
 a storage unit that stores the encoding target data;
 a memory unit that stores information about the characteristic point extracted by the characteristic extraction unit;
 a dividing unit that divides the encoding target data into a predetermined number of pieces of divided data; and
 a plurality of encoding units that encode the pieces of divided data into pieces of divided encoded data, wherein the dividing unit determines a dividing point, at which the encoding target data may be substantially equally allocated to the encoding units, on the basis of the total number of the plurality of encoding units and the information about the characteristic point, and then allocates the pieces of divided data to the encoding units.

2. The information processing apparatus according to Claim 1, wherein
 the characteristic extraction unit further detects a repeated image pattern in the encoding target data, wherein
 the memory unit stores information about the repeated image pattern together with information about the dividable point, and wherein
 the plurality of encoding units carry out encoding by skipping repeat images on the basis of the information about the repeated image pattern.

3. The information processing apparatus according to Claim 1 or 2, wherein the video data are 2-3 pulldown video data.

4. The information processing apparatus according to any one of Claims 1 to 3, wherein the dividable point is a scene change point in the encoding target data.

5. An information processing method comprising the steps of:

 controlling playing of a recording medium in which video data are recorded and capturing encoding target data;
 receiving the encoding target data and extracting a characteristic point, which at least includes a dividable point, of the encoding target data as a preprocess for encoding;
 storing the encoding target data;
 storing information about the extracted characteristic point;
 dividing the encoding target data into a predetermined number of pieces of divided data; and
 encoding the pieces of divided data into pieces of divided encoded data using a plurality of encoding apparatuses, wherein
 dividing the encoding target data includes determining a dividing point, at which the encoding target data may be substantially equally allocated to the encoding apparatuses, on the basis of the total number of the plurality of encoding apparatuses and the information about the characteristic point, and then allocating the pieces of divided data to the encoding apparatuses.

## FIG. 1

AUTHORING APPLICATION EXECUTION APPARATUS — 18

19

VIDEO SIGNAL PROCESSING APPARATUS — 14

AUDIO SIGNAL PROCESSING APPARATUS — 13

SUBTITLE SIGNAL PROCESSING APPARATUS — 12

MENU SIGNAL PROCESSING APPARATUS — 11

FILE SERVER — 17

MULTIPLEXER — 15

DOWNLOADER — 16

WRITER — 20

DLT — 21

HDD — 22

NETWORK — 23

10 — STUDIO-SIDE AUTHORING SYSTEM

EP 2 109 320 A2

18

# FIG. 2

```
┌─────────────────────────────────────┐
│   START PROCESSING IN                │
│   STUDIO-SIDE AUTHORING SYSTEM       │
└─────────────────────────────────────┘
                  │
                  ▼
┌─────────────────────────────────────┐
│  AUTHORING APPLICATION EXECUTION     │
│  APPARATUS NOTIFIES INTERNAL         │ ~S1
│  APPARATUSES, SUCH AS VIDEO SIGNAL   │
│  PROCESSING APPARATUS, OF EDITING    │
│  TARGET                              │
└─────────────────────────────────────┘
                  │
                  ▼
┌─────────────────────────────────────┐
│  AUTHORING APPLICATION EXECUTION     │
│  APPARATUS TRANSMITS VARIOUS PIECES  │ ~S2
│  OF INFORMATION FOR ENCODING TO      │
│  INTERNAL APPARATUSES SUCH AS        │
│  VIDEO SIGNAL PROCESSING APPARATUS   │
└─────────────────────────────────────┘
                  │
                  ▼
┌─────────────────────────────────────┐
│  INTERNAL APPARATUSES, SUCH AS       │
│  VIDEO SIGNAL PROCESSING APPARATUS,  │
│  RESPECTIVELY ENCODE CORRESPONDING   │ ~S3
│  DATA WITHIN EDITING TARGET, AND     │
│  STORE RESPECTIVE PIECES OF          │
│  RESULTANT ENCODED DATA IN FILE      │
│  SERVER                              │
└─────────────────────────────────────┘
                  │
                  ▼
┌─────────────────────────────────────┐
│  MULTIPLEXER MULTIPLEXES PIECES OF   │
│  ENCODED DATA STORED IN FILE SERVER  │
│  TO GENERATE MULTIPLEXED STREAM      │ ~S4
│  FILE, AND SUPPLIES GENERATED        │
│  MULTIPLEXED STREAM FILE TO          │
│  DOWNLOADER                          │
└─────────────────────────────────────┘
                  │
                  ▼
┌─────────────────────────────────────┐
│  DOWNLOADER STORES MULTIPLEXED       │
│  STREAM FILE IN AT LEAST ONE OF DLT, │ ~S5
│  HDD, AND NETWORK THROUGH WRITER     │
└─────────────────────────────────────┘
                  │
                  ▼
          ( END PROCESSING )
```

# FIG. 3

EP 2 109 320 A2

PLANT-SIDE AUTHORING SYSTEM 30

COPY PROTECTION DATA

DISK IMAGE DATA → PREMASTERING APPARATUS 31 → ENCRYPTED DATA → FORMATTER 32 → CUTTING APPARATUS 33 → 34

# FIG. 4

```
┌──────────────────────────────────────┐
│        START PROCESSING IN           │
│   PLANT-SIDE AUTHORING SYSTEM        │
└──────────────────────────────────────┘
                   │
                   ▼
┌──────────────────────────────────────┐
│   PREMASTERING APPARATUS ACQUIRES    │      S11
│ DISK IMAGE DATA (MULTIPLEXED STREAM FILE) │
└──────────────────────────────────────┘
                   │
                   ▼
┌──────────────────────────────────────┐
│ PREMASTERING APPARATUS ENCRYPTS DISK IMAGE DATA │
│ USING COPY PROTECTION DATA, AND SUPPLIES RESULTANT │   S12
│        ENCRYPTED DATA TO FORMATTER    │
└──────────────────────────────────────┘
                   │
                   ▼
┌──────────────────────────────────────┐
│ FORMATTER EXECUTES VARIOUS PROCESSINGS, SUCH AS │
│ SIGNAL LEVEL CONVERSION, ON ENCRYPTED DATA, AND │   S13
│ SUPPLIES RESULTANT SIGNALS TO CUTTING APPARATUS │
└──────────────────────────────────────┘
                   │
                   ▼
┌──────────────────────────────────────┐
│    CUTTING APPARATUS CREATES MASTER DISK │
│  (ORIGINAL MASTER OF OPTICAL DISK IN WHICH │
│ DISK IMAGE DATA ARE RECORDED) ON THE BASIS OF │   S14
│     SIGNALS SUPPLIED FROM FORMATTER   │
└──────────────────────────────────────┘
                   │
                   ▼
         ┌──────────────────┐
         │  END PROCESSING  │
         └──────────────────┘
```

## FIG. 5

EP 2 109 320 A2

# FIG. 6

DIVISION
PROCESSING
SECTION

SCENE CHANGE POINT
(CANDIDATE DIVISION POINT)

DIVISION POINT

EP 2 109 320 A2

# FIG. 7

A PATTERN

C PATTERN

B PATTERN

D PATTERN

EP 2 109 320 A2

# FIG. 8

EP 2 109 320 A2

# FIG. 9

VIDEO SIGNAL DISTRIBUTED PROCESSING APPARATUS

14'

60' MAIN CONTROLLER

65' ENCODE REMOTE CONTROL UNIT

19

$67_1$ REMOTE ENCODER

$67_2$ REMOTE ENCODER

$67_n$ REMOTE ENCODER

70 DATA COMPRESSION SERVER

48 VIDEO DATA SERVER

# FIG. 10

START

START CAPTURING OPERATION — S50

DETECT AND RECORD
CANDIDATE DIVISION POINTS — S51

S52
2-3 PULLDOWN DATA? — NO
↓ YES

DETECT AND RECORD PULLDOWN PATTERN — S53

WRITE VIDEO DATA — S54

INPUT ENCODING CONDITIONS — S55

DETERMINE NUMBER OF DIVISIONS
AND DIVISION POINTS — S56

S57                                    S58
2-3 PULLDOWN DATA? — YES → SKIP COPY FIELDS
NO

MEASURE DEGREE OF DIFFICULTY
DETERMINE PICTURE TYPE — S59
↓ YES

BIT ALLOCATION CALCULATION PROCESS — S60

ENCODE — S61

S65
CHECK IMAGE QUALITY — S62        CHANGE PARAMETERS
S64
S63
IS IMAGE QUALITY OK? — NO → PARTIALLY ENCODE
↓ YES

POSTPROCESSING — S66

END

# FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000278042 A
- JP 2002326864 A
- JP 2001053570 A
- JP 2006074461 A
- JP 2008103981 A